# EUROPÄISCHE PATENTANMELDUNG

(11) **EP 2 087 936 A1**
(43) Veröffentlichungstag der Anmeldung: **12.08.2009**
(21) Anmeldenummer: 08001797.3
(22) Anmeldetag: 31.01.2008
(51) Int. Cl.: B02C 13/31, B02C 13/16, B02C 23/24, B09B 3/00, B03B 9/06, B29B 17/02

(54) **Recyclingeinrichtung und Recyclingverfahren für Tonerkartuschen**

(71) Anmelder: Anlagenbau Umwelt + Technik Chemnitz GmbH, 09116 Chemnitz (DE)
(72) Erfinder: Winter, Mirko, 09116 Chemnitz (DE)
(74) Vertreter: Steiniger, Carmen

(57) **Zusammenfassung**

Die vorliegende Erfindung betrifft eine Recyclingeinrichtung mit einer Zerkleinerungsvorrichtung, welche einen gegenüber der Umgebung abgeschlossenen Behälter und einen in einem unteren Bereich des Behälters vorgesehenen Aufnahmekopf aufweist, an dem wenigstens ein flexibel ausgebildetes Schlagwerkzeug vorgesehen ist, das in dem unteren Bereich des Behälters umläuft, wobei die Zerkleinerungsvorrichtung mit einer Inertgaszuführung gekoppelt ist. Die Erfindung betrifft weiterhin ein Recyclingverfahren mit einem Zerkleinerungsschritt, in welchem mit einer Zerkleinerungsvorrichtung, die einen gegenüber der Umgebung abgeschlossenen Behälter und einen in einem unteren Bereich des Behälters vorgesehenen Aufnahmekopf aufweist, an dem wenigstens ein flexibel ausgebildetes Schlagwerkzeug vorgesehen ist, eine Zerkleinerung bei einem Umlaufen des Schlagwerkzeuges in einem unteren Bereich des Behälters vorgenommen wird, wobei dem Behälterinnenraum zumindest während des Zerkleinerungsschrittes Inertgas zugeführt wird. Es ist die Aufgabe der vorliegenden Erfindung, eine Recyclingeinrichtung und ein Recyclingverfahren zur Verfügung zu stellen, welche geeignet sind, auf sichere Art und Weise eine Vielzahl von Tonerkartuschen effektiv zu recyceln. Die Aufgabe wird einerseits durch eine Recyclingeinrichtung für Tonerkartuschen der oben genannten Gattung gelöst, wobei in oder an der Zerkleinerungsvorrichtung ein Sauerstoffüberwachungsmodul zur Überwachung des Sauerstoffgehaltes der Atmosphäre in dem Behälter der Zerkleinerungsvorrichtung vorgesehen ist. Ferner wird die Aufgabe durch ein Recyclingverfahren für Tonerkartuschen der oben genannten Gattung gelöst, wobei bei dem Zerkleinerungsschritt der Sauerstoffgehalt der Atmosphäre in dem Behälter der Zerkleinerungsvorrichtung überwacht wird.

## Beschreibung

Die vorliegende Erfindung betrifft eine Recyclingeinrichtung mit einer Zerkleinerungsvorrichtung, welche einen gegenüber der Umgebung abgeschlossenen Behälter und einen in einem unteren Bereich des Behälters vorgesehenen Aufnahmekopf aufweist, an dem wenigstens ein flexibel ausgebildetes Schlagwerkzeug vorgesehen ist, das in dem unteren Bereich des Behälters umläuft, wobei die Zerkleinerungsvorrichtung mit einer Inertgaszuführung gekoppelt ist. Die Erfindung betrifft weiterhin ein Recyclingverfahren mit einem Zerkleinerungsschritt, in welchem mit einer Zerkleinerungsvorrichtung, die einen gegenüber der Umgebung abgeschlossenen Behälter und einen in einem unteren Bereich des Behälters vorgesehenen Aufnahmekopf aufweist, an dem wenigstens ein flexibel ausgebildetes Schlagwerkzeug vorgesehen ist, eine Zerkleinerung bei einem Umlaufen des Schlagwerkzeuges in einem unteren Bereich des Behälters vorgenommen wird, wobei dem Behälterinnenraum zumindest während des Zerkleinerungsschrittes Inertgas zugeführt wird.

Eine Recyclingeinrichtung und ein Recyclingverfahren der oben genannten Gattung ist aus der Druckschrift DE 43 00 784 C2 bekannt. Mit der bekannten Vorrichtung und dem entsprechenden Verfahren werden ganze, nicht vorzerkleinerte Kühlschränke zerkleinert bzw. zermahlen. Die Vermahlung erfolgt hierbei durch an dem Aufnahmekopf vorgesehene flexible Schlagwerkzeuge und die Bewegung des Mahlgutes untereinander, wobei gleichzeitig auch eine Zentrifugalbewegung ausgenutzt wird. Die Vermahlung findet in einem geschlossenen, während des Zerkleinerungsvorgangs der Kühlschränke inertisierten Innenraum der Zerkleinerungsvorrichtung statt. Die Inertisierung im Inneren der Zerkleinerungsvorrichtung wird ausgeführt, um Staubexplosionen vorzubeugen. Die Zuführung des gasförmigen Stickstoffs in den Behälter derzeit bekannter Zerkleinerungsvorrichtungen erfolgt über einen Anschlussstutzen, wobei der Druck im Behälter über eine Behälterdrucküberwachung überwacht wird. Ist das Behälterinnere inertisiert, wird der Anschlussstutzen geschlossen, und es erfolgt die Zerkleinerung des in den Behälter eingebrachten Mahlgutes. Nach Beendigung des Mahlvorganges wird die Inertluft aus dem Behälterinneren mit den frei gewordenen Gasen über eine Absaugleitung abgesaugt.

Obwohl die bekannte Zerkleinerungsvorrichtung für ein Recyceln von Kühlschränken gut geeignet ist, können beispielsweise Tonerkartuschen mit den bekannten Anlagen derzeit nicht effektiv recycelt werden, da beim Recyceln von Tonerkartuschen, trotz Inertisierung des Behälterinnenraums der Zerkleinerungsvorrichtung, aufgrund des aus den Tonerkartuschen beim Zerkleinern austretenden Tonerstaubs eine hohe Gefahr des Auftretens von Staubexplosionen besteht, welche momentan nur dadurch eingeschränkt werden kann, dass jeweils nur wenige Tonerkartuschen pro Zerkleinerungsvorgang zerkleinert werden.

Es besteht daher die Aufgabe, eine Recyclingvorrichtung und ein Recyclingverfahren zur Verfügung zu stellen, das geeignet ist, auf sichere Art und Weise eine Vielzahl von Tonerkartuschen effektiv zu recyceln.

Die Aufgabe wird einerseits durch eine Recyclingeinrichtung der oben genannten Gattung gelöst, bei welcher die Recyclingeinrichtung eine Recyclingeinrichtung für Tonerkartuschen ist, und in oder an der Zerkleinerungsvorrichtung ein Sauerstoffüberwachungsmodul zur Überwachung des Sauerstoffgehaltes der Atmosphäre in dem Behälter der Zerkleinerungsvorrichtung vorgesehen ist. Überraschenderweise wirkt sich die Höhe des Sauerstoffgehaltes in der Atmosphäre in dem Behälter der Zerkleinerungsvorrichtung entscheidend auf die Effektivität des Zerkleinerungsvorganges von Tonerkartuschen in der Zerkleinerungsvorrichtung aus, so dass gerade bei besonders geringem Sauerstoffgehalt in dem Behälter eine besonders große Anzahl an Tonerkartuschen besonders effektiv zerkleinert werden kann. Darüber hinaus sinkt bei sinkendem Sauerstoffgehalt in der Atmosphäre des Behälters der Zerkleinerungsvorrichtung die Gefahr des Auftretens von Staubexplosionen, so dass ein besonders sicherer Zerkleinerungsprozess zur Verfügung gestellt werden kann.

In einer bevorzugten Ausführungsform der vorliegenden Erfindung ist das Sauerstoffüberwachungsmodul mit der Inertgaszuführung gekoppelt. Somit kann dann, wenn ein hoher Sauerstoffgehalt in der Atmosphäre des Behälters der Zerkleinerungsvorrichtung durch das Sauerstoffüberwachungsmodul ermittelt wird, auch während des Zerkleinerungsprozesses verstärkt Inertgas in den Behälter der Zerkleinerungsvorrichtung eingebracht werden. Dadurch sinkt der Sauerstoffgehalt im Behälter, die Effektivität der Zerkleinerung der Tonerkartuschen steigt und die Sicherheit des Zerkleinerungsprozesses wächst.

Es ist besonders von Vorteil, wenn in oder an der Zerkleinerungsvorrichtung ein Inertgasverbrauchsmessmodul vorgesehen ist. Hierdurch kann kontinuierlich der Verbrauch an Inertgas festgestellt werden.

In einer bevorzugten Ausführungsvariante der vorliegenden Erfindung ist die Inertgaszuführung beidseitig einer Materialzuführung zu dem Behälter der Zerkleinerungsvorrichtung angeordnet. Indem an einem Bereich Inertgas zugeführt werden kann, in welchem die Zerkleinerungsvorrichtung während der Materialzuführung offen ist, kann durch die dort eingesetzten Inertgasströme weitgehend ein Eindringen von Außenluft in den Behälter verhindert werden, so dass während der Prozessführung relativ schnell eine für die Zerkleinerung geeignete Atmosphäre zur Verfügung gestellt werden kann.

Vorzugsweise ist in oder an der Zerkleinerungsvorrichtung ein Temperaturmessgerät zur Messung der Temperatur in dem Behälter der Zerkleinerungsvorrichtung vorgesehen. Mit dem Temperaturmessgerät kann relativ schnell festgestellt werden, ob die Temperatur in dem Behälter der Zerkleinerungsvorrichtung einen bestimmten vorgegebenen Wert, ab welchem beispielsweise die Gefahr von Staubexplosionen vorliegt, übersteigt. Ferner kann mit Hilfe des Temperaturmessgerätes eine für eine effektive Zerkleinerung der Tonerkartuschen optimale Temperatur in dem Behälterinneren der Zerkleinerungsvorrichtung eingestellt werden.

Es hat sich zudem als vorteilhaft erwiesen, wenn an einem Materialzuführbereich vor dem Behälter der Zerkleinerungsvorrichtung ein Füllstandsüberwachungsmodul für die Überwachung des Füllstandes auf einem Eintragsschieber vorgesehen ist. Auf diese Weise kann eine Beschickung der Zerkleinerungsvorrichtung in Abhängigkeit von dem erreichten Füllstand vorgenommen werden.

Beispielsweise kann das Füllstandsüberwachungsmodul an einer Schleuse zwischen einem Aufgabeförderer und dem Behälter der Zerkleinerungsvorrichtung vorgesehen sein. An bzw. auf der Schleuse kann besonders gut die Anzahl bzw. Menge der auf dem Eintragsschieber befindlichen Tonerkartuschen erfasst werden.

In einer günstigen Ausgestaltung der vorliegenden Erfindung umfasst das Füllstandsüberwachungsmodul einen Ultraschallsensor. Der Ultraschallsensor eignet sich besonders gut, um als eine Art Zählwerk die Menge an Tonerkartuschen auf dem Eintragsschieber vor der Zerkleinerungsvorrichtung zu überwachen.

Die Aufgabe der Erfindung wird ferner durch ein Recyclingverfahren der oben genannten Gattung gelöst, bei welchem das Recyclingverfahren ein Recyclingverfahren für Tonerkartuschen ist, wobei bei dem Zerkleinerungsschritt der Sauerstoffgehalt der Atmosphäre in dem Behälter der Zerkleinerungsvorrichtung überwacht wird.

Durch die Überwachung des Sauerstoffgehaltes während des Zerkleinerungsvorganges kann der Sauerstoffgehalt in der Atmosphäre des Behälters kontinuierlich unter einem bestimmten vorgegebenen Maximalwert gehalten werden, wodurch eine besonders hohe Effektivität der Zerkleinerung der eingebrachten Tonerkartuschen realisierbar ist und wodurch die Gefahr des Auftretens von Staubexplosionen nahezu auf Null reduziert werden kann.

In einem besonders bevorzugten Ausführungsbeispiel der vorliegenden Erfindung wird die Zuführung von Inertgas in Abhängigkeit von dem ermittelten Sauerstoffgehalt gesteuert. Übersteigt der gemessene Sauerstoffgehalt einen voreingestellten Maximalwert, kann während des Zerkleinerungsvorgangs entsprechend viel Inertgas in das Behälterinnere gebracht werden, um den Sauerstoffgehalt abzusenken, wodurch eine besonders effektive Zerkleinerung als auch eine minimierte Gefahr des Auftretens von Staubexplosionen erreicht werden kann.

In einer weiteren vorteilhaften Variante der Erfindung wird die Menge an zugeführtem Inertgas gemessen. Somit kann die Inertgaszuführung besonders gut gesteuert werden und zusätzlich der Inertgasverbrauch kontinuierlich ermittelt werden.

Es ist darüber hinaus besonders von Vorteil, wenn die Temperatur in dem Behälter der Zerkleinerungsvorrichtung gemessen wird. In Abhängigkeit von der gemessenen Temperatur können Rückschlüsse auf die Effektivität des Zerkleinerungsvorganges in der Zerkleinerungsvorrichtung gezogen werden. Auch kann bei Überschreiten einer voreingestellten Maximaltemperatur, welche unter Umständen zu einer erhöhten Gefahr von Staubexplosionen führt, der Zerkleinerungsvorgang rechtzeitig unterbrochen werden, um die Gefahr abzuwenden.

In einem weiteren Beispiel der vorliegenden Erfindung wird der Füllstand auf einem Eintragsschieber vor dem Behälter der Zerkleinerungsvorrichtung überwacht. Wenn ein bestimmter Füllstand am Eintragsschieber erreicht ist, kann somit der Eintragsschieber kurzfristig zur Beschickung des Behälterinneren der Zerkleinerungsvorrichtung geöffnet werden und nach dem Beschickungsvorgang den Zerkleinerungsprozess wieder von der Umgebung abschließen. Auf diese Weise kann die Einhaltung der eingestellten maximalen Sauerstoffwerte in dem Behälterinneren der Zerkleinerungsvorrichtung abgesichert werden.

Vorteilhafte Ausführungsformen der vorliegenden Erfindung, deren Funktion und Vorteile werden im Folgenden anhand der Figuren der Zeichnung näher erläutert, wobei
- Fig. 1:: schematisch eine mögliche Ausführungsform der er- findungsgemäßen Recyclingeinrichtung zeigt; und
- Fig. 2:: schematisch anhand eines Fließbildes eine mögli- che Ausführungsform des erfindungsgemäßen Toner- kartuschen-Recyclingverfahrens zeigt.

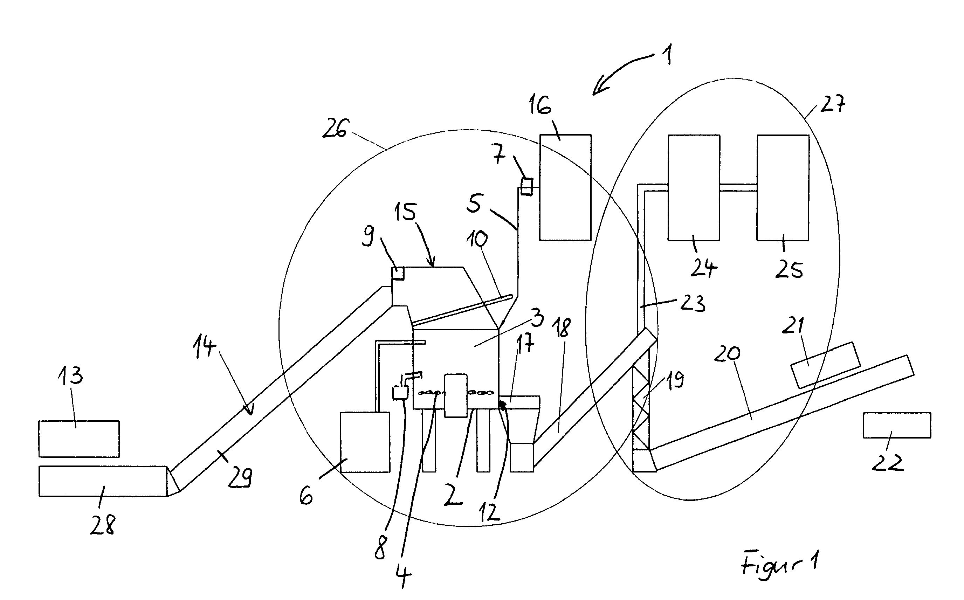

Fig. 1 zeigt schematisch eine mögliche Ausführungsform einer erfindungsgemäßen Recyclingeinrichtung 1. Die Recyclingeinrichtung 1 aus Fig. 1 weist einen Aufgabebunker 13 auf, in bzw. auf welchem Tonerkartuschen zunächst vorgelagert werden können, um diese dann dosiert auf ein in Fig. 1 unter dem Aufgabebunker 13 angeordnetes Aufgabeband 14 aufzubringen. Das Vorsehen eines Aufgabebunkers 13 ist jedoch optional, so dass andere Ausführungsformen der Erfindung auch keinen Aufgabebunker 13 aufweisen können.

Nachfolgend schließt sich an den Aufgabebunker 13 der Recyclingeinrichtung 1 aus Fig. 1 das Aufgabeband 14 an, welches zu einem Materialzuführbereich 15 einer Zerkleinerungsvorrichtung 2 führt. Das Aufgabeband 14 besteht aus einem waagerechten Unterflur-Aufgabeteil 28 und einem eingehausten Steigteil 29.

Als Grundkonstruktion für die Zerkleinerungsvorrichtung 2 kann ein herkömmlicher Querstromzerspaner verwendet werden, wobei jedoch auch zahlreiche Konstruktionsmodifikationen möglich sind. Die Zerkleinerungsvorrichtung 2 besitzt einen gegenüber der Umgebung abgeschlossenen Behälter 3. Ferner weist die Zerkleinerungsvorrichtung 2 einen in einem unteren Bereich des Behälters 3 vorgesehen Aufnahmekopf auf, an dem wenigstens ein flexibel ausgebildetes Schlagwerkzeug 4 vorgesehen ist. Als Schlagwerkzeug 4 können ein oder mehrere Ketten verwendet werden, wobei die Ketten am Rand des Aufnahmekopfs befestigt sein können oder, durch den Aufnahmekopf hindurch laufend, als durchgehende Kette ausgebildet sind.

Der Aufnahmekopf ist über ein Getriebe mit einem Motor verbunden, so dass das wenigstens eine Schlagwerkzeug 4 durch den Aufnahmekopf in eine Rotation versetzt werden kann und in dem unteren Bereich des Behälters 3 umlaufen kann.

An dem Behälter 3 ist eine Inertgaszuführung 5 für die Zuführung eines Inertgases 16 vorgesehen. Als Inertgas 16 kann beispielsweise Stickstoff eingesetzt werden.

In dem in Fig. 1 gezeigten Beispiel ist die Inertgaszuführung 5 beidseitig der Materialzuführung zu dem Behälter 3 der Zerkleinerungsvorrichtung 2 angeordnet.

Ferner ist in oder an der Zerkleinerungsvorrichtung 2 ein Sauerstoffüberwachungsmodul 6 zur Überwachung des Sauerstoffgehaltes der Atmosphäre in dem Behälter 3 der Zerkleinerungsvorrichtung 2 vorgesehen.

Obwohl in Fig. 1 nicht explizit dargestellt, ist in dem gezeigten Ausführungsbeispiel das Sauerstoffüberwachungsmodul 6 der Recyclingeinrichtung 1 mit der Inertgaszuführung 5 gekoppelt. Darüber hinaus ist an der Inertgaszuführung 5 ein optionales Inertgasverbrauchsmessmodul 7 vorgesehen.

In oder an der Zerkleinerungsvorrichtung 2 ist zusätzlich ein Temperaturmessgerät 8 zur Messung der Temperatur in dem Behälter 3 der Zerkleinerungsvorrichtung vorgesehen.

Oberhalb des Behälters 3 der Zerkleinerungsvorrichtung 2 befindet sich ein Materialzuführbereich 15 der Zerkleinerungsvorrichtung 2, welcher durch einen Eintragsschieber 10 von dem Inneren des Behälters 3 trennbar ist. An einer Schleuse 11 zwischen dem Aufgabeband bzw. Aufgabeförderer 14 und dem Behälter 3 der Zerkleinerungsvorrichtung 2 ist ein Füllstandsüberwachungsmodul 9 zur Überwachung des Füllstandes auf dem Eintragsschieber 10 vorgesehen. In dem in Fig. 1 gezeigten Beispiel umfasst das Füllstandsüberwachungsmodul 9 einen Ultraschallsensor.

In der Recyclingeinrichtung 1 ist der Eintragsschieber 10 ein Hydraulikschieber, kann aber in anderen Ausführungsvarianten der vorliegenden Erfindung auch auf einem anderen Prinzip basieren. In Abhängigkeit von dem mit dem Ultraschallsensor 9 ermittelten Füllstand auf dem Eintragsschieber 10 kann sich der Eintragsschieber 10 kurzzeitig zur Beschickung des Behälterinneren 3 der Zerkleinerungsvorrichtung 2 öffnen und danach den Zerkleinerungsprozess wieder von der Umgebung abschließen.

An dem Behälter 3 ist ein Austrag 12 vorgesehen, an welchen ein Puffersieb 17 gekoppelt ist. Daran schließt sich eine Austragsschnecke 18 an, welche zu einem Zick-Zack-Sichter 19 führt. An den Zick-Zack-Sichter 19 ist ein Austragsband 20 angeschlossen, über welchem in dem Beispiel der Recyclingeinrichtung 1 aus Fig. 1 ein Eisenscheider 21 angeordnet ist. Ferner ist am Ende des Austragsbandes 20 ein Nichteisen-Scheider 22 vorgesehen.

Ausgehend von der Austragsschnecke 18 gelangt die Schwerfraktion in den Zick-Zack-Sichter 19. Die Leichtfraktion einschließlich der gasförmigen Recyclingprodukte wird über eine Leitung 23 in ein Zyklon 24 und weiter in einen Filter 25 gebracht.

In der Recylingeinrichtung 1 ist der mit dem Bezugszeichen 26 schematisch gekennzeichnete Bereich ein gasdichter Bereich. Die mit dem Bezugszeichen 27 schematisch gekennzeichneten Elemente der Recyclingeinrichtung 1 sind im Wesentlichen dem Windsichter der Recyclingeinrichtung 1 zuzuordnen.

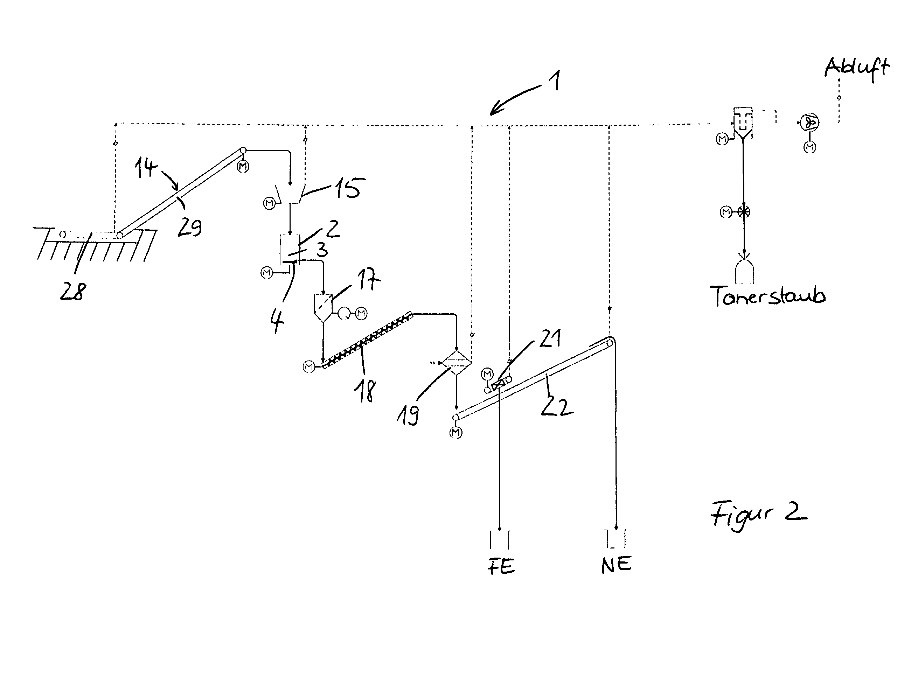

Fig. 2 zeigt schematisch anhand eines Fließbildes eine mögliche Ausführungsform des erfindungsgemäßen Recyclingverfahrens, welches im Folgenden näher erläutert wird. Der nachfolgend erörterte Verfahrensablauf ist rein exemplarisch und kann zahlreiche Modifikationen, ein Weglassen einzelner Schritte aber auch zusätzliche Prozessschritte aufweisen.

Wie in Fig. 1 gezeigt, können vor Aufgabe der zu zerkleinernden Tonerkartuschen diese im Ausgabebunker 13 zwischengelagert werden und dann dosiert auf das Aufgabeband bzw. den Aufgabeförderer 14 gebracht werden. Vor der Aufgabe werden Materialien, welche nicht eindeutig als Tonerkartuschen identifiziert werden können, manuell entfernt, um Schäden von der Anlagentechnik und vom Menschen abzuwenden.

Die zu zerkleinernden und aufzubereitenden Tonerkartuschen können gemischt sein.

Die Tonerkartuschen werden mittels eines geeigneten Radladers über den optionalen Aufgabebunker 13 oder direkt auf das Aufgabeband 14 zu der Zerkleinerungsvorrichtung 2 dosiert. Damit beginnt der automatische Prozessablauf der Recyclingeinrichtung 1. Während des Prozesses wird dieser kontinuierlich überwacht bzw. beobachtet. Dabei werden der Materialtransport auf dem Aufgabeband 14 in die Zerkleinerungsvorrichtung 2, die Abfüllung der Zerkleinerungsprodukte, wie Eisen, Nicht-Eisen-Metalle, Hartkunststoffe oder Polyurethanmehl, die Prozesstemperatur durch den Temperatursensor 8, der Inertgasverbrauch durch das Inertgasverbrauchsmessmodul 7 und der Sauerstoffgehalt im Prozessgas durch das Sauerstoffüberwachungsmodul 6 kontinuierlich überwacht und ständig an einem Bedienpult kontrolliert.

Über das Aufgabeband 14 wird die Zerkleinerungsvorrichtung 2 mit dem vorbereiteten Aufgabegut beschickt. Der Förderer bzw. das Aufgabeband 14 dient als weitere Pufferzone für die aufzubereitenden Tonerkartuschen.

Im unteren Bereich des Steigteils 29 des Aufgabebands 14 befindet sich im Bandrücklauf ein Auslauf für Material, das im Untertrum durch Anhaften oder Ähnliches in den Bandrücklauf mitgenommen wurde. Dieser Auslauf muss beim Betrieb geschlossen sein, um den durch die Inertisierung eingestellten maximalen Sauerstoffwert innerhalb der Zerkleinerungsvorrichtung 2 nicht zu überschreiten.

An dem Materialzuführbereich 15 zu der Zerkleinerungsvorrichtung 2 befinden sich beidseitig Anschlüsse 5 zur Inertgaszuführung bzw. Stickstoffeinblasung. In Abhängigkeit von der Prozessgas-Sauerstoffmessung am Kessel bzw. Behälter 3 der Zerkleinerungsvorrichtung 2 wird der Innenraum des Behälters 3 als auch des Materialzuführbereichs 15 zur Reduzierung des Sauerstoffgehalts mit Inertgas inertisiert, um eine Staubexplosion zu vermeiden. Unter einer Inertisierung ist hierbei die Zugabe von Inertgas, wie beispielsweise Stickstoff, zur Verdrängung des Luftsauerstoffs und/oder explosionsfähiger Gase oder Gasgemische zu verstehen.

Steuerelement und "Zählwerk" ist das Füllstandsüberwachungsmodul 9, das ein Ultraschallsensor aufweist und in dem in Fig. 1 gezeigten Ausführungsbeispiel auf der Schleuse 11 vom Aufgabeförderer 14 in die Zerkleinerungseinrichtung 2 eingebaut ist und den Füllstand auf dem Eintragsschieber 10 vor dem Behälter 3 der Zerkleinerungsvorrichtung 2 überwacht. Ist ein voreingestellter Füllstand erreicht, öffnet sich der Eintragsschieber 10 kurzzeitig zur Beschickung des Behälterinneren 3 der Zerkleinerungsvorrichtung 2 und schließt danach den Zerkleinerungsprozess wieder von der Umgebung ab. Somit ist die Einhaltung der eingestellten maximalen Sauerstoffwerte innerhalb des Behälters 3 garantiert.

Die Befüllung des Behälterinneren 3 der Zerkleinerungsvorrichtung 2 erfolgt in Chargen, die mit einer entsprechenden Vermahlzeit verarbeitet werden. Die Größe einer Befüllungscharge ist variabel und hängt in der vorgestellten Ausführungsvariante der Erfindung von der Einstellung des Füllstandsüberwachungsmoduls 9 ab.

Die Zerkleinerung erfolgt über das wenigstens eine rotierende Schlagwerkzeug 4. Nach Ablauf der Vermahlzeit öffnet sich der hydraulische Austragsschieber am Austrag 12 der Zerkleinerungsvorrichtung 2 und trägt das Mahlgut unter Ausnutzung der Zentrifugalkräfte in das sich an den Austrag 12 anschließende Puffersieb 17 aus.

Das Puffersieb 17 ist in dem in Fig. 1 gezeigten Beispiel ein Vibrationssieb und dient als Zwischenpuffer zum Schutz der Austragsschnecke 18 gegen Überfüllung. Nach dem Schließen des Austragsschiebers wird ein Steuersignal für eine erneute Befüllung des Behälterinneren 3 der Zerkleinerungsvorrichtung 2 erteilt.

Die Länge der Vermahlzyklen ist abhängig vom Input bzw. der Chargengröße und der nachfolgenden Sortiertechnik, wird bei Inbetriebnahme der Recyclingeinrichtung 1 optimiert und ist durch einen Bediener an einem Bedienpult der Recyclingeinrichtung 1 einstellbar.

Während des Zerkleinerungsprozesses in der Zerkleinerungsvorrichtung 2 werden Verbundstoffe, aus welchen die aufzuarbeitenden Tonerkartuschen aufgebaut sind, wie z.B. Metall/Metall oder Kunststoffe/Metall, voneinander getrennt. Dabei erfolgt eine mechanische Öffnung der Tonerbehälter, wodurch eine Freisetzung des Tonerstaubs erfolgt. Der Tonerstaub bildet mit dem zur Inertisierung zugeführten Inertgas 16 in der Zerkleinerungsvorrichtung 2 sowie mit dem bereits vorhandenen Gasgemisch in dem Behälter 3 der Zerkleinerungsvorrichtung 2 das Prozessgas.

Da bei der Zerkleinerung Tonerstaub in erheblichem Umfang durch Zerkleinerung und Wärme freigesetzt wird, bilden alle an der Zerkleinerungsvorrichtung 2 angebundenen Baugruppen, wie das Aufgabeband 14, die Schleuse 11, der Behälter 3, das Puffersieb 17 und die Austragsschnecke 18 eine gasdichte Einheit 26. Dies gewährleistet eine emissionsfreie Bearbeitung.

Das Prozessgas wird nach der Windsichtungs- und Filterstufe 27 an die Umgebung abgegeben.

Während des Zerkleinerungsvorganges in der Zerkleinerungsvorrichtung 2 darf die Temperatur im Inneren des Behälters 3 nicht über 80°C ansteigen. Dies wird durch das Temperaturmessgerät 8 überwacht.

Durch die Art der Zerkleinerung erfolgt eine unterschiedliche Korngrößenverteilung des Mahlgutes. Die Erzeugung von feinem Mehl bzw. Staub, wie beispielsweise Tonerpulver, oder einer mehrere millimeter- bis zentimetergroßen Körnung, wie z.B. bei Kunststoffen oder Metallen, hängt neben der Verweilzeit stark von der Bruchcharakteristik der in die Zerkleinerungsvorrichtung 2 eingebrachten Stoffe ab. Je nach Eigenschaften der Werkstoffe werden typische Korngrößen erzeugt. Dies ist von entscheidender Bedeutung für die nachfolgende Sortierung.

Die Drehzahl bzw. Fördergeschwindigkeit der Austragsschnecke 18 aus der Zerkleinerungsvorrichtung 2 ist einstellbar, so dass das Mischmaterial aus der Zerkleinerungsvorrichtung 2 in den Zick-Zack-Sichter 19 der Windsichtung 27 dosiert aufgegeben wird.

Für die Schwerfraktion ist im weiteren Verlauf keine geschlossene Förderung mehr erforderlich. Die Leichtfraktion wird bis zu einer Big-Bag-Abfüllung gekapselt transportiert.

Die Windsichtung 27 weist, wie in Fig. 1 gezeigt, den Zick-Zack-Sichter 19 auf, in dem ein variabel einstellbarer Saugluftstrom die Leichtfraktion nach oben zieht. Nach dem Zick-Zack-Sichter 19 ist die Trennung zwischen Schwer- und Leichtfraktion erfolgt. Die hauptsächlich aus Metallen und Kunststoffen bestehende Schwerfraktion fällt nach unten, wird über das Austragsband 20 zu dem Eisenscheider 21 und dem Nichteisen-Scheider 22 zugeführt.

Die Leichtfraktion, hauptsächlich Tonerstaub, aus dem Zick-Zack-Sichter 19 wird anschließend in der Filterstufe 25 abgeschieden, ausgetragen und in Big-Bags gefüllt. Das gereinigte Prozessgas wird an die Umgebung abgegeben.

Die Schwerfraktion wird über den Gleitgurtförderer bzw. das Austragsband 20 mit einer Steigung auf den optionalen Nichteisen-Scheider abgegeben. Vor der Abgabe des Materials am Bandende unterläuft der Gurt den Eisen- bzw. Magnetabscheider 21. Dieser als Überbandmagnet ausgebildete Abscheider 21 zieht über ein direkt über dem Bandlauf 20 erzeugtes Magnetfeld die Eisenanteile nach oben bzw. seitlich ab und befördert sie über eine Rutsche auf einen daneben stehenden Container.

Zur Verbesserung der Sortenreinheit ist als Antriebstrommel des Gleitgurtförderers 20 eine Neodym-Magnettrommel eingebaut. Mit deren Hilfe werden nicht magnetische Edelstahlanteile über eine Rutsche in einen bauseits beigestellten Container gegeben.

Die weitere Fraktion, Nichteisen, wird auf einem optionalen Wirbelstromabscheider zur Nichteisenabscheidung 22 gegeben. Hier wird das Material über eine langsam rotierende, waagerecht angeordnete Trommel dosiert, welche ein mit hoher Frequenz wechselndes Polarisationsfeld erzeugt. Dadurch wird in leitenden Materialien ein Magnetfeld induziert, welches die Flugbahn beim Abwurf von der Trommel kontrolliert verändert und somit leitende Materialien, wie Nichteisenmetalle, von nicht leitfähigen Materialien, wie Kunststoffen, selektiert. Für die Reinheit der zurückgewonnenen Wertstoffe ist wiederum die Beschaffenheit des Aufgabegutes bzw. die manuelle Vorsortierung von entscheidender Bedeutung.

## Patentansprüche

1. Recyclingeinrichtung mit einer Zerkleinerungsvorrichtung (2), welche einen gegenüber der Umgebung abgeschlossenen Behälter (3) und einen in einem unteren Bereich des Behälters (3) vorgesehenen Aufnahmekopf aufweist, an dem wenigstens ein flexibel ausgebildetes Schlagwerkzeug (4) vorgesehen ist, das in dem unteren Bereich des Behälters (3) umläuft, wobei die Zerkleinerungsvorrichtung (2) mit einer Inertgaszuführung (5) gekoppelt ist,
**dadurch gekennzeichnet,**
**dass** die Recyclingeinrichtung eine Recyclingeinrichtung (1) für Tonerkartuschen ist, und in oder an der Zerkleinerungsvorrichtung (2) ein Sauerstoffüberwachungsmodul (6) zur Überwachung des Sauerstoffgehaltes der Atmosphäre in dem Behälter (3) der Zerkleinerungsvorrichtung (2) vorgesehen ist.

2. Recyclingeinrichtung nach Anspruch 1,
**dadurch gekennzeichnet,**
**dass** das Sauerstoffüberwachungsmodul (6) mit der Inertgaszuführung (5) gekoppelt ist.

3. Recyclingeinrichtung nach Anspruch 1 oder 2,
**dadurch gekennzeichnet,**
**dass** in oder an der Zerkleinerungsvorrichtung (2) ein Inertgasverbrauchsmessmodul (7) vorgesehen ist.

4. Recyclingeinrichtung nach einem der vorhergehenden Ansprüche,
**dadurch gekennzeichnet,**
**dass** die Inertgaszuführung (5) beidseitig einer Materialzuführung zu dem Behälter (3) der Zerkleinerungsvorrichtung (2) angeordnet ist.

5. Recyclingeinrichtung nach einem der vorhergehenden Ansprüche,
**dadurch gekennzeichnet,**
**dass** in oder an der Zerkleinerungsvorrichtung (2) ein Temperaturmessgerät (8) zur Messung der Temperatur in dem Behälter (3) der Zerkleinerungsvorrichtung (2) vorgesehen ist.

6. Recyclingeinrichtung nach einem der vorhergehenden Ansprüche,
**dadurch gekennzeichnet,**
**dass** an einem Materialzuführbereich (15) vor dem Behälter (3) der Zerkleinerungsvorrichtung (2) ein Füllstandsüberwachungsmodul (9) für die Überwachung des Füllstandes auf einem Eintragsschieber (10) vorgesehen ist.

7. Recyclingeinrichtung nach Anspruch 6,
**dadurch gekennzeichnet,**
**dass** das Füllstandsüberwachungsmodul (9) an einer Schleuse (11) zwischen einem Aufgabeförderer (14) und dem Behälter (3) der Zerkleinerungsvorrichtung (2) vorgesehen ist.

8. Recyclingeinrichtung nach Anspruch 6 oder 7,
**dadurch gekennzeichnet,**
**dass** das Füllstandsüberwachungsmodul (9) einen Ultraschallsensor umfasst.

9. Recyclingverfahren mit einem Zerkleinerungsschritt, in welchem mit einer Zerkleinerungsvorrichtung (2), die einen gegenüber der Umgebung abgeschlossenen Behälter (3) und einen in einem unteren Bereich des Behälters (3) vorgesehenen Aufnahmekopf aufweist, an dem wenigstens ein flexibel ausgebildetes Schlagwerkzeug (4) vorgesehen ist, eine Zerkleinerung bei einem Umlaufen des Schlagwerkzeuges (4) in einem unteren Bereich des Behälters vorgenommen wird, wobei dem Behälterinnenraum zumindest während des Zerkleinerungsschrittes Inertgas (16) zugeführt wird,
**dadurch gekennzeichnet,**
**dass** das Recyclingverfahren ein Recyclingverfahren für Tonerkartuschen ist, wobei bei dem Zerkleinerungsschritt der Sauerstoffgehalt der Atmosphäre in dem Behälter (3) der Zerkleinerungsvorrichtung (2) überwacht wird.

10. Recyclingverfahren nach Anspruch 9,
**dadurch gekennzeichnet,**
**dass** die Zuführung von Inertgas (16) in Abhängigkeit von dem ermittelten Sauerstoffgehalt gesteuert wird.

11. Recyclingverfahren nach Anspruch 9 oder 10,
**dadurch gekennzeichnet,**
**dass** die Menge an zugeführtem Inertgas (16) gemessen wird.

12. Recyclingverfahren nach einem der Ansprüche 9 bis 11,
**dadurch gekennzeichnet,**
**dass** die Temperatur in dem Behälter (3) der Zerkleinerungsvorrichtung (2) gemessen wird.

13. Recyclingverfahren nach einem der Ansprüche 9 bis 12,
**dadurch gekennzeichnet,**
**dass** der Füllstand auf einem Eintragsschieber (10) vor dem Behälter (3) der Zerkleinerungsvorrichtung (2) überwacht wird.

## Geänderte Patentansprüche

### Geänderte Patentansprüche gemäss Regel 137(2) EPÜ.

**1.** Recyclingeinrichtung mit einer Zerkleinerungsvorrichtung (2), welche einen gegenüber der Umgebung abgeschlossenen Behälter (3) und einen in einem unteren Bereich des Behälters (3) vorgesehenen Aufnahmekopf aufweist, an dem wenigstens ein flexibel ausgebildetes Schlagwerkzeug (4) vorgesehen ist, das in dem unteren Bereich des Behälters (3) umläuft, wobei die Zerkleinerungsvorrichtung (2) mit einer Inertgaszuführung (5) gekoppelt ist,
**dadurch gekennzeichnet,**
**dass** die Recyclingeinrichtung eine Recyclingeinrichtung (1) für Tonerkartuschen ist, und in oder an der Zerkleinerungsvorrichtung (2) ein Sauerstoffüberwachungsmodul (6) zur Überwachung des Sauerstoffgehaltes der Atmosphäre in dem Behälter (3) der Zerkleinerungsvorrichtung (2) vorgesehen ist, und dass in oder an der Zerkleinerungsvorrichtung (2) ein Temperaturmessgerät (8) zur Messung der Temperatur in dem Behälter (3) der Zerkleinerungsvorrichtung (2) vorgesehen ist.

**2.** Recyclingeinrichtung nach Anspruch 1,
**dadurch gekennzeichnet,**
**dass** das Sauerstoffüberwachungsmodul (6) mit der Inertgaszuführung (5) gekoppelt ist.

**3.** Recyclingeinrichtung nach Anspruch 1 oder 2,
**dadurch gekennzeichnet,**
**dass** in oder an der Zerkleinerungsvorrichtung (2) ein Inertgasverbrauchsmessmodul (7) vorgesehen ist.

**4.** Recyclingeinrichtung nach einem der vorhergehenden Ansprüche,
**dadurch gekennzeichnet,**
**dass** die Inertgaszuführung (5) beidseitig einer Materialzuführung zu dem Behälter (3) der Zerkleinerungsvorrichtung (2) angeordnet ist.

**5.** Recyclingeinrichtung nach einem der vorhergehenden Ansprüche,
**dadurch gekennzeichnet,**
**dass** an einem Materialzuführbereich (15) vor dem Behälter (3) der Zerkleinerungsvorrichtung (2) ein Füllstandsüberwachungsmodul (9) für die Überwachung des Füllstandes auf einem Eintragsschieber (10) vorgesehen ist.

**6.** Recyclingeinrichtung nach Anspruch 5,
**dadurch gekennzeichnet,**
**dass** das Füllstandsüberwachungsmodul (9) an einer Schleuse (11) zwischen einem Aufgabeförderer (14) und dem Behälter (3) der Zerkleinerungsvorrichtung (2) vorgesehen ist.

**7.** Recyclingeinrichtung nach Anspruch 5 oder 6,
**dadurch gekennzeichnet,**
**dass** das Füllstandsüberwachungsmodul (9) einen Ultraschallsensor umfasst.

**8.** Recyclingverfahren mit einem Zerkleinerungsschritt, in welchem mit einer Zerkleinerungsvorrichtung (2), die einen gegenüber der Umgebung abgeschlossenen Behälter (3) und einen in einem unteren Bereich des Behälters (3) vorgesehenen Aufnahmekopf aufweist, an dem wenigstens ein flexibel ausgebildetes Schlagwerkzeug (4) vorgesehen ist, eine Zerkleinerung bei einem Umlaufen des Schlagwerkzeuges (4) in einem unteren Bereich des Behälters vorgenommen wird, wobei dem Behälterinnenraum zumindest während des Zerkleinerungsschrittes Inertgas (16) zugeführt wird,
**dadurch gekennzeichnet,**
**dass** das Recyclingverfahren ein Recyclingverfahren für Tonerkartuschen ist, wobei bei dem Zerkleinerungsschritt der Sauerstoffgehalt der Atmosphäre in dem Behälter (3) der Zerkleinerungsvorrichtung (2) überwacht wird und die Temperatur in dem Behälter (3) der Zerkleinerungsvorrichtung (2) gemessen wird.

**9.** Recyclingverfahren nach Anspruch 8,
**dadurch gekennzeichnet,**
**dass** die Zuführung von Inertgas (16) in Abhängigkeit von dem ermittelten Sauerstoffgehalt gesteuert wird.

**10.** Recyclingverfahren nach Anspruch 8 oder 9,
**dadurch gekennzeichnet,**
**dass** die Menge an zugeführtem Inertgas (16) gemessen wird.

**11.** Recyclingverfahren nach einem der Ansprüche 8 bis 10,
**dadurch gekennzeichnet,**
**dass** der Füllstand auf einem Eintragsschieber (10) vor dem Behälter (3) der Zerkleinerungsvorrichtung (2) überwacht wird.
